# EUROPÄISCHE PATENTSCHRIFT

(11) **EP 0 866 881 B1**
(45) Veröffentlichungstag und Bekanntmachung des Hinweises auf die Patenterteilung: **05.12.2001**
(21) Anmeldenummer: 97918837.2
(22) Anmeldetag: 12.09.1997
(51) Int. Cl.: C22B 7/04, C21C 5/36

(54) **VERFAHREN ZUM AUFARBEITEN VON VERBRENNUNGSRÜCKSTÄNDEN**
PROCESS FOR RECLAIMING INCINERATION WASTE
PROCEDE DE VALORISATION DE RESIDUS DE COMBUSTION

(30) Priorität: 17.09.1996 AT 54996 U
(43) Veröffentlichungstag der Anmeldung: 30.09.1998
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT9700201
(87) Internationale Veröffentlichungsnummer: WO9812359

(56) Entgegenhaltungen:
- EP-A- 0 096 212
- WO-A-91/02824
- AU-B- 484 882
- BE-A- 769 260
- DE-A- 4 429 653

## Beschreibung

Die Erfindung bezieht sich auf ein Verfahren zum Aufarbeiten von Verbrennungsrückständen bzw. Schlacken aus Müllverbrennungsanlagen oder Stahlwerksschlacken in einem Konverter, bei welchem die schmelzflüssige Schlacke mit einem Metallbad umgesetzt wird, wobei durch das Metallbad Sauerstoff geblasen wird.

Verfahren, bei welchen Schlacken mit einem Metallbad umgesetzt werden, sind bekannt. Als allgemeinen technischen Hintergrund hierzu kann beispielsweise das aus der DE 44 29 653 A1 bekannt-gewordene Verfahren zum Frischen von Metallschmelzen, insbesondere von Roheisen, zu Stahl genannt werden. Bei diesem Verfahren wird durch das Metallbad Sauerstoff als Luft oder gemeinsam mit CO₂ zur Kühlung der Unterbaddüsen geblasen.

Auch Aufarbeitungsverfahren, bei welchen Schlacken mit einem Metallbad umgesetzt werden, wobei auf diese Weise eine entsprechende Reduktion metallischer Anteile aus den Schlacken erfolgreich durchgeführt werden konnte, wurden bereits vorgeschlagen. Bei den bisher vorgeschlagenen Verfahren wurde das Reduktionspotential des Metallbades durch geeignete Maßnahmen gesteuert, wobei hiefür in erster Linie das Einblasen von Kohlenstoff unter gleichzeitigem Einblasen von Sauerstoff über Unterbaddüsen vorgeschlagen wurde.

In entsprechenden Versuchen wurde allerdings eine relativ hohe Staubauswurfrate und damit relativ hohe Eisenverluste beobachtet. Der Konverterauswurf wurde bei konventionellen Betrieben der vorgeschlagenen Verfahren mit 10 bis 15 Gew.% des gesamten Konverterinhaltes festgestellt, wodurch ein erheblicher Aufwand für die nachfolgende Abgasreinigung erforderlich war.

Die Erfindung zielt nun darauf ab, ein Verfahren der eingangs genannten Art dahingehend weiterzubilden, daß die Eisengewinnung erhöht wird und die Staubauswurfrate und damit die Eisenverluste wesentlich verringert werden. Zur Lösung dieser Aufgabe besteht das erfindungsgemäße Verfahren im wesentlichen darin, daß die Schichthöhe der Schlacke mindestens 1,2 m beträgt, daß der Sauerstoff als Luft oder gemeinsam mit CO₂ oder Wasserdampf sowie gegebenenfalls CH₄ in einer Menge eingedüst wird, mit welcher eine Badtemperatur von weniger als 1700° C nahe der Düsen einstellbar ist und daß das Reduktionspotential des Metallbades zur selektiven Reduktion von Eisen aus der Schlacke durch Eindüsung von Kohlenstoff mit Inertgasen wie N₂ in das Metallbad eingestellt wird. Der erfindungsgemäßen Verfahrensführung liegt die Überlegung zugrunde, daß Eisenpartikel durch extrem hohe Temperaturen im Eisenbad um die Pilzköpfe der Unterbaddüsen bei Temperaturen von bis zu 2400° C verdampfen. Eisen hat bei derartig hohen Temperaturen bereits einen nicht unerheblichen Dampfdruck, wobei der überhitzte Eisendampf durch die Eisen- und Schlackenbadschicht hindurchtritt und teilweise im Konvertergasraum zu kolloidalen Eisentröpfchen im Mikrometerbereich kondensiert. Derartige Eisentröpfchen im Mikrometerbereich werden leicht aus dem Konverter ausgetragen, wobei Messungen in den Abgasen ergeben haben, daß die Feinstaubpartikel in den Abgasen einen relativ hohen Anteil an metallischem Eisen enthalten. Durch das Unterbaddüsensystem werden weitere Eisentröpfchen und Schlackenpartikel aus dem Konverter geschleudert.

Durch die Kühlung der Düsen, durch Verwendung von Luft und insbesondere durch gemeinsames Einblasen von CO₂ und Wasserdampf zur Kühlung der Düsen, gelingt es nun das Temperaturniveau um die Unterbaddüsen auf vertretbare Werte zu senken, bei welchen der Eisendampfdruck bereits vernachlässigbar wird. In der Folge genügt es den Düsendruck so einzustellen, daß keine Eisentröpfchen durch die Schlackenschmelze hindurchdringen können. Aufgrund des guten Wärmeüberganges zwischen Schlacke und Eisenbad ist aber hiefür eine entsprechende Mindesthöhe der Schlackenschichtdicke festgestellt worden, wobei neben einer Eisenbadhöhe von etwa 1 m eine Mindesthöhe der Schlackenschicht von über 1,2 m für ausreichend befunden wurde, um den Eisenaustrag und damit die Eisenverluste drastisch zu minimieren.

Über die Unterbaddüsen können zusätzlich Kohlenwasserstoffe zur Kühlung der Düsen eingebracht werden. Mit Rücksicht auf die im Vergleich zu üblichen bodenblasenden Konvertern teilweise höheren Blasdrücke ist aber jedenfalls eine Beimengung von CO₂ oder Wasserdampf zur Kühlung und Inertisierung von wesentlicher Bedeutung. Das Verfahren wird hiebei so geführt, daß CO₂ und H₂O-Dampf sowie gegebenenfalls CH₄ in einer Menge eingedüst wird, mit welcher eine Badtemperatur von weniger als 1700° C nahe den Düsen einstellbar ist, wobei vorzugsweise die Badtemperatur nahe den Düsen zwischen 1450° C und 1650° C gehalten wird. Bei derartigen Temperaturen entstehen keine nennenswerten Mengen an verdampftem Eisen, sodaß ein wesentlicher Faktor, der für den hohen Konverterauswurf verantwortlich zu sein scheint, auf diese Weise Berücksichtigung findet.

Um den gewünschten Wärmeübergang und die weitestgehende vollständige Umsetzung sicherzustellen, wird mit Vorteil so vorgegangen, daß die Schlackenschichthöhe auf etwa 1,8 m eingestellt wird.

Zur selektiven Reduktion von metallischen Anteilen aus der Schlacke ist es, wie eingangs erwähnt, erforderlich, das Reduktionspotential des Metallbades entsprechend einzustellen. Dies erfolgt so, daß in das Metallbad Kohlenstoff mit Inertgasen wie N₂ zur Einstellung des Reduktionspotentiales des Metallbades eingedüst wird.

Mit den Abgasen wird immer noch ein nicht unbeträchtlicher Anteil an Staub ausgeworfen, wobei erfindungsgemäß die Reinigung der Abgase ohne zusätzliche Nebenprodukte, welche nicht im Verfahren weiterverwendet werden können, mit Vorteil in einfacher Weise dadurch gelingt, daß mit den Abgasen ausgetragene Feststoffe mit Additiven, wie Al₂O₃, SiO₂ oder Schlackengranulat in einem Schwebegas- oder Wirbelschicht-Wärmetauscher gekühlt werden und daß die gekühlten Feststoffe in einem Zyklonabscheider abgetrennt und dem Schlackenbad rückgeführt werden. Durch einen derartigen Schwebegas- oder Wirbelschicht-Wärmetauscher können Additive, wie sie beispielsweise für die Einstellung der Schlackenbasizität und der Schlackenviskosität von Vorteil sind, gleichzeitig zur Kühlung und zur besseren Abtrennung der mit den Abgasen ausgetragenen Feststoffe eingesetzt werden und in einfacher Weise dem Schlackenbad wieder rückgeführt werden, sodaß eine vollständige Kreislaufführung gelingt.

Eine weitere Verbesserung der energetischen Ausnutzung und damit der Wirtschaftlichkeit des Verfahrens läßt sich dadurch erreichen, daß das den Zyklonabscheider verlassende Heißgas nach einer weiteren Kühlung unter Energieverwertung über einen Filter, insbesondere einen Sack- oder Schlauchfilter, geführt wird und einer Restgasverwertung, wie z.B. einer Verbrennung, zugeführt wird.

Um einen optimalen Wärmeübergang auf die Schlackenschmelze sicherzustellen, wird in einem Nachverbrennungsraum mit Vorteil so vorgegangen, daß das Restgas zumindest teilweise über Düsen durch das Schlackenbad geleitet wird und einer Nachverbrennung zum Erhitzen der Schlacken unterworfen wird. Ein optimaler Wärmeübergang ergibt sich hiebei insbesondere bei der Verwendung von Hochdruckunterbaddüsen, wobei im Nachverbrennungsraum ca. 35 Gew.% in Form von Schlackentröpfchen mittels des als Retourgas eingesetzten Restgases dispergiert werden, wobei eine Nachverbrennung des gebildeten Kohlenmonoxides und des Wasserstoffes bis zu 60 % gelingt. Der Nachverbrennungsgrad ist hiebei als das Verhältnis der Summe von Kohlenmonoxid und Wasserstoff zu Kohlenmonoxid und Wasserstoff und CO₂ und H₂O definiert. Die Nachverbrennungswärme wird hiebei über Strahlung und Konvektion an die Schlackenpartikel übertragen, wodurch eine besonders effiziente Erwärmung der Schlacke unter Ausnutzung der chemischen Wärme des Konverterabgases gelingt.

Durch die erfindungsgemäßen Maßnahmen gelingt es, den Staubaustrag zum Abgasreinigungssystem drastisch zu reduzieren. Zirka 5 Gew.% des Eisenbadinhaltes verlassen hauptsächlich in Form von Schlackentröpfchen den Konverter. In einem Schwebegas-Wärmetauscher bzw. einem Wirbelschicht-Wärmetauscher kann kaltes Additiv in Form von Al₂O₃, SiO₂ sowie Schlackengranulat ebenso wie die aus dem Zyklonabscheider abgetrennten Feststoffe mit einer Körnung von 0,5 bis 3,5 mm aufgegeben werden. Das kalte Additiv sowie das gekühlte Zyklonprodukt kühlen schlagartig den Konverterauswurf, der sich noch weitgehend in flüssigem bzw. teigigem Zustand befindet. Der auf diese Weise erhältliche Mischstaub kann bei Temperaturen von ca. 750° C problemlos in einem Heiß-Zyklonabscheider abgeschieden werden und dem Nachverbrennungsraum rückgeführt werden. Im Falle von Schlackengranulat mit hohem Eisenoxidanteil wird dieses bei der Gleichstromkühlung im Schwebegas-Wärmetauscher bzw. bei der Kühlung in einem zirkulierenden Wirbelschichtreaktor zumindest teilweise metallisiert, wodurch sich eine besonders effiziente Abkühlung ergibt.

Der Additivzusatz und die Rückführung des gekühlten Zyklonproduktes erlauben es auch, hochchromhaltige Stahlschlacke in dünnflüssige chromfreie synthetische Hochofenschlacke für die Zementherstellung umzuwandeln.

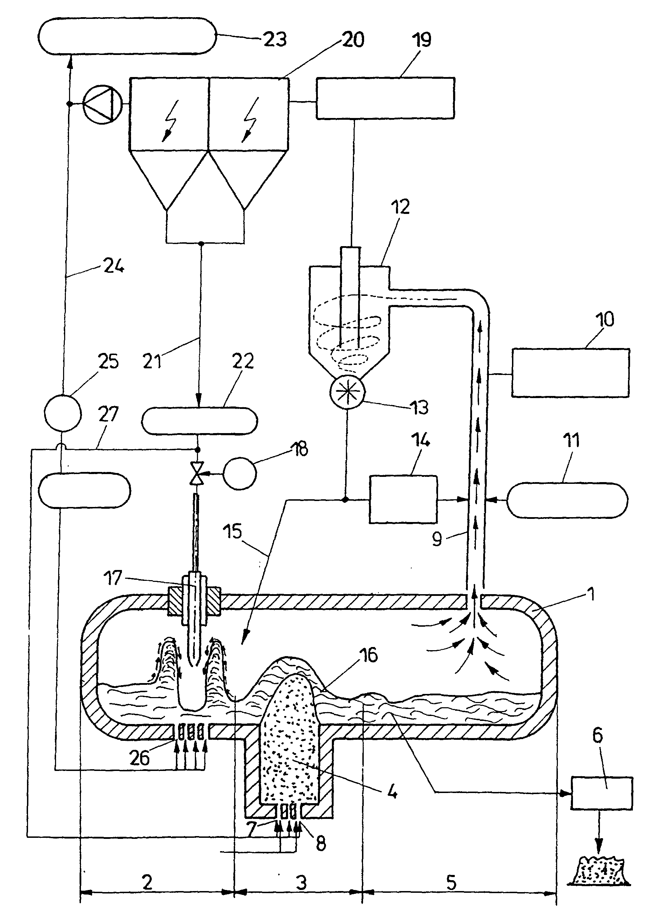

Die Erfindung wird nachfolgend anhand einer in der Zeichnung schematisch dargestellten Vorrichtung zur Durchführung des erfindungsgemäßen Verfahrens näher erläutert.

In der Zeichnung ist mit 1 ein Konverter bezeichnet, welcher als Eisenbadreaktor ausgeführt ist. Der Konverter ist hiebei in drei Zonen unterteilt, wobei eine erste Zone 2 der Nachverbrennung und damit der Verbesserung der Energiebilanz dient. In einer anschließenden Zone 3 erfolgt die Reduktion über einem Eisenbad 4, worauf anschließend eine Absetzzone 5 vorgesehen ist, aus welcher die Schlackenschmelze abgezogen werden kann und einer Granulation 6 zugeführt werden kann.

Das Eisenbad 4 in der Reduktionszone wird über Bodendüsen 7 und 8 mit Kohlenstoff sowie Sauerstoff, Luft, CO₂, Wasserdampf und gegebenenfalls Methangas beaufschlagt, wodurch das Reduktionspotential des Eisenbades 4 entsprechend eingestellt wird. Je nach Ausgangszusammensetzung der Schlacken und insbesondere je nach dem Chromanteil dieser Schlacken wird das Eisenbad 4 aufgechromt und es kann auf diese Weise Ferro-Chromium-Carburé gewonnen werden.

Aus der Absetzzone 5 des Konverters 1 werden die heißen Abgase bei Temperaturen von etwa 1700° C über eine Leitung 9 ausgetragen. Die Abgase werden einem Schwebegas-Wärmetauscher 10 zugeführt, wobei an dieser Stelle Additive, insbesondere Al₂O₃, SiO₂ oder Müllverbrennungsschlackengranulat, welches bereits einer ersten Aufarbeitung unterworfen wurde, aus einem Bunker 11 aufgegeben werden. Die Feinpartikel im Abgas werden hiebei auf Temperaturen von etwa 750° C gekühlt und gelangen in einen Zyklonabscheider 12. Die aus dem Zyklonabscheider 12 über eine Zellradschleuse 13 ausgebrachten Feststoffe können über einen Rückgutkühler 14 geführt werden und gleichfalls ebenso wie die Additive aus dem Bunker 11 dem Schwebegas-Wärmetauscher zugeführt werden. Die Feststoffe werden in der Folge über eine Leitung 15 der Nachverbrennungszone rückgeführt und auf die flüssige Stahlschlacke aufgebracht. Die Stahlschlacke ist hiebei mit 16 bezeichnet.

In den Nachverbrennungsraum mündet eine wassergekülte Sauerstofflanze 17, wobei Sauerstoff aus einer Sauerstoffquelle 18 zugeführt wird.

Den Zyklonabscheider 12 verlassen heiße Restgase, welche zunächst über einen Heißgaskühler 19 geführt werden, worauf sie einem Filter 20 zugeführt werden. Der Filterstaub kann über eine Leitung 21 ausgetragen werden und in einem Speicher 22 gesammelt werden. Aus diesem Speicher 22 kann der Filterstaub dem Sauerstoff der Sauerstofflanzen beigement werden und in die Nachverbrennungszone des Konverters 1 rückgeführt werden. Ein wesentlicher Anteil des Restgases, welcher den Filter 20 verläßt, kann in der Folge einer Restgasverwertung 23 zugeführt werden, wobei mit Rücksicht auf den hohen Anteil von etwa 50 Vol.% CO und H₂ im Restgas hier noch ein hoher Brennwert zur Verfügung steht. Eine Teilmenge dieses Restgases gelangt über die Leitung 24 und einen Kompressor 25 mit einem Druck von zwischen 4 und 12 bar an Unterbaddüsen 26, welche in das Schlackenbad 16 in der Nachverbrennungszone 2 münden. Gemeinsam mit dem über die Sauerstofflanze 17 gebrachten Sauerstoff gelingt hier eine weitere Verbrennung unter intensiver Ausnutzung der thermischen Energie zum Erhitzen des Schlackenbades.

Für den Fall, daß ein Filterstaub mit hohem Eisengehalt anfällt, kann dieser hocheisenhältige Filterstaub über eine Leitung 27 den Bodendüsen 7 bzw. 8 unter dem Eisenbad 4 zugeführt werden, um- auf diese Weise den metallischen Anteil nahezu vollständig rückzugewinnen.

Mit dem erfindungsgemäßen Verfahren gelingt es auch spezielle Stahlschlacken und insbesondere hochvanadiumhältige Stahlschlacken erfolgreich aufzuarbeiten, wobei eine konzentrierte Vandiumlegierung als Metallbad 4 gewonnen wird. Diese Legierung kann anschließend verschlackt werden, wobei eine hochkonzentrierte kohlenstoffreie Vanadiumschlacke gebildet wird, aus welcher sich Ferro-Vanadin weitestgehend kohlenstoffrei gewinnen läßt.

## Patentansprüche

1. Verfahren zum Aufarbeiten von Verbrennungsrückständen bzw. Schlacken aus Müllverbrennungsanlagen oder Stahlwerksschlacken in einem Konverter, bei welchem die schmelzflüssige Schlacke mit einem Metallbad umgesetzt wird, wobei durch das Metallbad Sauerstoff geblasen wird, **dadurch gekennzeichnet, daß** die Schichthöhe der flüssigen Schlacke auf dem Metallbad mindestens 1,2 m beträgt, daß der Sauerstoff als Luft oder gemeinsam mit CO₂ oder Wasserdampf sowie gegebenenfalls CH₄ in einer Menge eingedüst wird, mit welcher eine Badtemperatur von weniger als 1700° C nahe der Düsen einstellbar ist und daß das Reduktionspotential des Metallbades zur selektiven Reduktion von Eisen aus der Schlacke durch Eindüsung von Kohlenstoff mit Inertgasen wie N₂ in das Metallbad eingestellt wird.

2. Verfahren nach Anspruch 1, **dadurch gekennzeichnet, daß** über die Unterbaddüsen zusätzlich Kohlenwasserstoffe zur Kühlung der Düsen eingebracht werden.

3. Verfahren nach Anspruch 1 oder 2, **dadurch gekennzeichnet, daß** die Badtemperatur nahe den Düsen zwischen 1450° C und 1650° C gehalten wird.

4. Verfahren nach Anspruch 1, 2 oder 3, **dadurch gekennzeichnet, daß** die Schlackenschichthöhe auf etwa 1,8 m eingestellt wird.

5. Verfahren nach einem der Ansprüche 1 bis 4, **dadurch gekennzeichnet, daß** mit den Abgasen ausgetragene Feststoffe mit Additiven, wie Al₂O₃, SiO₂ oder Schlackengranulat in einem Schwebegas- oder Wirbelschicht-Wärmetauscher gekühlt werden und daß die gekühlten Feststoffe in einem Zyklonabscheider abgetrennt und dem Schlackenbad rückgeführt werden.

6. Verfahren nach einem der Ansprüche 1 bis 5, **dadurch gekennzeichnet, daß** das den Zyklonabscheider verlassende Heißgas nach einer weiteren Kühlung unter Energieverwertung über einen Filter, insbesondere einen Sack- oder Schlauchfilter, geführt wird und einer Restgasverwertung, wie z.B. einer Verbrennung, zugeführt wird.

7. Verfahren nach einem der Ansprüche 1 bis 6, **dadurch gekennzeichnet, daß** das Restgas zumindest teilweise über Düsen durch das Schlackenbad geleitet wird und einer Nachverbrennung zum Erhitzen der Schlacken unterworfen wird.

## Claims

1. Procedure for processing combustion residues/slag from refuse incinerators or steelworks slag in a converter, in which the molten slag is converted using a metal bath, with oxygen being injected through the metal bath, **characterized in that** the layer thickness of the liquid slag in the metal bath amounts to at least 1.2 m, the oxygen is injected as air or together with CO₂ or water vapour and possibly CH₄ in a quantity at which the bath temperature is adjustable below 1700°C close to the nozzles, -and the reduction potential of the metal bath for the selective reduction of iron from the slag is adjusted by injection of carbon with inert gases such as N₂ into the metal bath.

2. Procedure according to Claim 1, **characterized in that** hydrocarbons are additionally injected via the nozzles in the base of the bath to cool the nozzles.

3. Procedure according to Claim 1 or 2, **characterized in that** the bath temperature close to the nozzles is kept between 1450°C and 1650°C.

4. Procedure according to Claim 1, 2 or 3, **characterized in that** the slag layer thickness is adjusted to approx. 1.8 m.

5. Procedure according to any one of Claims 1 to 4, **characterized in that** solids discharged with the waste gases are cooled with additives, such as Al₂O₃, SiO2 or slag granulate are cooled in a suspension-gas or fluidised-bed heat exchanger and the cooled solids are precipitated in a cyclone separator and returned to the slag bath.

6. Procedure according to any one of Claims 1 to 5, **characterized in that** the hot gas leaving the cyclone separator, after a further cooling process with energy recycling is passed through a filter, especially a bag or hose filter, and fed into a residual gas recycling process, e.g. combustion.

7. Procedure according to any one of Claims 1 to 6, **characterized in that** the residual gas is conveyed at least partially through the slag bath via nozzles and subjected to an afterburning process to heat the slag.

## Revendications

1. Procédé de valorisation de résidus de combustion ou de laitiers issus d'installations d'incinération d'ordures, ou de laitiers d'aciérie, dans un convertisseur, dans lequel le laitier en fusion est mis à réagir avec un bain métallique, de l'oxygène étant insufflé à travers le bain métallique, **caractérisé en ce que** la hauteur de couche du laitier en fusion sur le bain métallique est au moins égale à 1,2 m, **en ce que** l'oxygène est insufflé en tant qu'air ou conjointement avec du CO₂ ou de la vapeur d'eau, ainsi qu'éventuellement CH₄, dans une quantité grâce à laquelle il est possible d'ajuster une température de bain inférieure à 1 700 °C à proximité des buses, et **en ce que** le potentiel de réduction du bain métallique est ajusté pour une réduction sélective du fer issu du laitier par introduction de carbone avec des gaz inertes tels que N₂ dans le bain métallique.

2. Procédé selon la revendication 1, **caractérisé en ce que** l'on charge en outre par les buses inférieures du bain des hydrocarbures pour refroidir les buses.

3. Procédé selon la revendication 1 ou 2, **caractérisé en ce que** la température du bain à proximité des buses est maintenue entre 1 450 °C et 1 650 °C.

4. Procédé selon la revendication 1, 2 ou 3, **caractérisé en ce que** la hauteur de couche du laitier est ajustée à environ 1,8 m.

5. Procédé selon l'une des revendications 1 à 4, **caractérisé en ce que** des solides évacués avec les effluents gazeux sont refroidis avec des additifs tels que Al₂O₃, SiO₂ ou des granulés de scorie dans un échangeur de chaleur par mise en suspension des gaz ou en lit fluidisé, et **en ce que** les solides refroidis sont séparés dans un séparateur à cyclone et ré-injectés dans le bain de laitier.

6. Procédé selon l'une des revendications 1 à 5, **caractérisé en ce que** le gaz chaud quittant le séparateur à cyclone est amené, après un nouveau refroidissement et avec exploitation d'énergie, par un filtre, en particulier un filtre à sac ou un filtre à manche, et alimente un dispositif d'exploitation du gaz résiduaire, comme par exemple une installation d'incinération.

7. Procédé selon l'une des revendications 1 à 6, **caractérisé en ce que** le gaz résiduaire est dirigé au moins partiellement par des buses à travers le bain de laitier et est soumis à une postcombustion pour chauffer le laitier.
